# EUROPÄISCHE PATENTSCHRIFT

(11) **EP 2 550 490 B1**
(45) Veröffentlichungstag und Bekanntmachung des Hinweises auf die Patenterteilung: **05.03.2014**
(21) Anmeldenummer: 11709424.3
(22) Anmeldetag: 22.03.2011
(51) Int. Cl.: F24J 2/48, C25D 11/22, C25D 7/00

(54) **VERFAHREN UND VORRICHTUNG ZUR HERSTELLUNG EINER HOCHSELEKTIV ABSORBIERENDEN BESCHICHTUNG AUF EINEM SOLARABSORBERBAUTEIL UND SOLARABSORBER MIT EINER SOLCHEN BESCHICHTUNG**
METHOD AND DEVICE FOR PRODUCING A HIGHLY SELECTIVELY ABSORBING COATING ON A SOLAR ABSORBER COMPONENT, AND SOLAR ABSORBER HAVING SUCH A COATING
PROCÉDÉ ET DISPOSITIF POUR LA RÉALISATION D'UN REVÊTEMENT ABSORBANT HAUTEMENT SÉLECTIVEMENT SUR UN ÉLÉMENT D'ABSORBEUR SOLAIRE ET ABSORBEUR SOLAIRE PRÉSENTANT UN TEL REVÊTEMENT

(30) Priorität: 23.03.2010 DE 102010012573
(43) Veröffentlichungstag der Anmeldung: 30.01.2013
(73) Patentinhaber: ODB-Tec GmbH & Co.KG, 41468 Neuss (DE)
(72) Erfinder: OSTERMANN, Dieter, 41468 Neuss (DE)
(74) Vertreter: Cohausz & Florack
(86) Internationale Anmeldenummer: PCT/EP2011/054376
(87) Internationale Veröffentlichungsnummer: WO 2011/117256

(56) Entgegenhaltungen:
- EP-A1- 0 003 175
- EP-A1- 1 688 683
- DE-A1- 2 850 134
- US-A- 5 472 788

## Beschreibung

Die vorliegende Erfindung betrifft ein Verfahren zur Herstellung einer selektiv absorbierenden Beschichtung auf einem Solarabsorberbauteil sowie ein nach diesem Verfahren hergestelltes Solarabsorberbauteil.

Der Nutzung der Sonnenenergie kommt mit zunehmend knapper werdenden Vorräten an fossilen Energieträgern eine immer größer werdende Bedeutung bei der Sicherung der Energieversorgung der Industriestaaten zu.

Die Energie der Solarstrahlung kann über Photovoltaik direkt in elektrische Energie umgesetzt werden. Eine weitere Nutzung der Sonnenenergie besteht im Betrieb herkömmlicher solarthermischer Flachkollektoren zur Warmwasserbereitung und solarthermischer Kraftwerke (Concentrating Solar Power, CSP). Bei diesen Kraftwerken bündeln fokussierendere Reflektorflächen das einfallende Sonnenlicht auf Absorberflächen, die ihrerseits mit einem Wärmeträgermedium, beispielsweise Thermalöl oder überhitztem Dampf, in Kontakt stehen und dieses erhitzen. Der im Absorber weiter aufgeheizte Dampf bzw. der in einem von dem erhitzten Thermalöl gespeisten weiteren Wärmetauscher erzeugte Dampf treibt sodann in bekannter Weise zur Stromproduktion eine Turbine und einen mit der Turbine verbundenen Generator an. Wärmespeicher ermöglichen dabei eine Stromproduktion nahezu unabhängig von der jeweiligen Tageszeit.

Eine besondere Form solarthermischer Kraftwerke bilden sogenannte Parabolrinnenkraftwerke. Diese umfassen eine Vielzahl von Parabolrinnenkollektoren, die ihrerseits aus bis zu 400 Meter langen Rinnen aus im Querschnitt parabolisch geformten Spiegelsegmenten bestehen, in deren Brennlinie vakuumisolierte Absorberrohre, sogenannte Receiver, angeordnet sind, die in Folge der Fokussierung der Sonnenstrahlung mit bis zu 80-facher Strahlungsintensität beaufschlagt werden. Um stets eine optimale Stellung relativ zur Sonne einzunehmen, können die Rinnen dem Tagesgang der Sonne nachgeführt werden.

Eine entscheidende Rolle für die Effizienz von Parabolrinnenkraftwerken spielen neben der optischen Präzision der Spiegel die jeweils rund vier Meter langen, durch eine Glashülle vakuumdicht isolierten Receiver, welche die Solarstrahlung in Wärme umwandeln. Die Receiver umfassen ein Hüllrohr bestehend aus einem beschichteten, hochtransparenten und robusten Borosilikatglas und einem von dem Hüllrohr eingefassten Absorberrohr aus Stahl, welches möglichst viel Sonnenstrahlung absorbieren und nur wenig Wärmestrahlung abgeben darf. Aufgrund der unterschiedlichen thermischen Ausdehnungskoeffizienten von Stahl und dem Hüllrohr muss das Hüllrohr mit einem Stahlfaltenbalg gehalten werden. Entscheidend für eine maximale Absorption der Sonnenstrahlung und minimalen Emission ist eine stabile hochselektive Beschichtung der Absorberrohroberfläche. Diese muss in der Lage sein, Strahlung im Wellenlängenbreich von 0,3 bis 2,5 Mikrometer (abhängig von der Betriebstemperatur der Absorberoberfläche; bei Flachkollektoren mit T=100°C bis 2,5 µm und bei CSP-Anlagen mit T=250-400°C bis 1,2 µm) zu absorbieren, in dem der wesentliche Teil der Energie der Solarstrahlung enthalten ist. Die wieder abgegebene, nicht nutzbare Wärmestrahlung im Wellenlängenbereich von 4,0 bis 50 µm sollte dagegen so gering wie möglich gehalten werden. Außerdem sollte der thermische Emissionsgrad ε thermisch stabil sein.

Aus der Praxis sind Fertigungsverfahren für Absorberbauteile als Komponenten beispielsweise von Sonnen-Flachkollektoren in vielfältiger Ausführung bekannt. So ist beispielsweise aus der DE 28 50 134 A1 ein Verfahren zur Herstellung eines Sonnenenergieabsorbers in Form eines plattenförmigen Elementes aus Aluminium bekannt, bei dem auf einer Seite des plattenförmigen Elementes durch anodische Oxidation eine feinporige Aluminiumschicht erzeugt wird, die in einem zweiten Verfahrensschritt durch elektrolytische Einlagerung eines Metalls, beispielsweise Nickel, Kobalt, Kupfer, Eisen, Zinn, Silber oder Zink, in die Poren pigmentiert wird. Durch die Anodisierung der Aluminiumoberfläche mit anschließender Abscheidung von Metallpigmenten in den Poren wird eine hohe Absorption im Wellenlängenbereich von 0,3 bis 2,5 Mikrometer bei vergleichsweise geringer Wärmeabstrahlung erreicht. Zudem ist der Solarenergieabsorber wirksam gegen Korrosion geschützt.

EP-A-1 688 683 offenbart ein ähnliches Verfahren.

Als nachteilig erweist sich jedoch, dass die für eine Absorption im sichtbaren Spektralbereich exakt einzustellende Schichtdicke nur unter exakt konstant gehaltenen Umgebungsbedingungen, nämlich konstanter Temperatur, konstantem Druck und konstanter Elektrolytkonzentration, erreicht werden kann. Temperaturschwankungen, wie sie bei einer Herstellung unter industriellen Bedingungen stets auftreten können, führen zu sichtbaren Schwankungen in der Schichtdicke auch bei identischem Substratmaterial und somit zu unterschiedlichem Absorptionverhalten sowie zu einem unterschiedlichem optischen Farbeindruck.

Neben der vorstehend genannten elektrolytischen Erzeugung absorbierender Schichten auf Solarabsorberbauteilen können solche Schichten auch im Vakuum mit bekannten Beschichtungsverfahren, wie beispielsweise der physikalischen Gasphasenabscheidung (PVD), erzeugt werden. Derartige Verfahren erfordern jedoch einen sehr hohen apparativen Aufwand, der bei Absorberröhren mit einer Länge von mehreren Metern oder allgemein bei Plattenware keine wirtschaftliche Fertigung im industriellen Maßstab mehr zulässt.

Hiervon ausgehend liegt der Erfindung die Aufgabe zugrunde, ein Verfahren zur Herstellung einer selektiv absorbierenden Beschichtung auf einem Solarabsorberbauteil anzugeben, mit welchem die Erzeugung hochselektiv absorbierender Schichten auf metallischen Oberflächen verschiedener Geometrie, insbesondere auch auf rohrförmigen Bauteilen, Plattenware ebenso wie auf Coilware, in großtechnischem Maßstab mit hoher Reproduzierbarkeit und maximalem Absorptionsvermögen und somit optimierter Gebrauchsfähigkeit ermöglicht wird. Die mit der Realisierung des Verfahrens verbundenen Investitionskosten sollten gering sein.

Die Aufgabe wird erfindungsgemäß mit einem Verfahren zur Herstellung einer selektiv absorbierenden Beschichtung auf einem Solarabsorberbauteil gelöst, welches die folgenden Verfahrensschritte umfasst:
- Bereitstellen eines Substrats mit metallischer Oberfläche,
- Bestimmung der inneren Oberfläche der metallischen Oberfläche,
- Bestimmung der für die Erzeugung der absorbierenden Beschichtung erforderlichen Ladungsmenge pro Flächeneinheit in Abhängigkeit der inneren Oberfläche,
- Elektrolytische Erzeugung der absorbierenden Schicht in einem ersten Schritt durch Gleichstrom-Anodisieren der metallischen Oberfläche des Substrats unter Bildung einer porigen Oxidschicht und in einem zweiten Schritt durch Wechselstrom-Pigmentieren der Poren der Oxidschicht, wobei das Gleichstrom-Anodisieren und das Wechselstrom-Pigmentieren bis zum Erreichen der für den jeweiligen Schritt aus der inneren Oberfläche bestimmten Ladungsmenge pro Flächeneinheit erfolgt,
wobei das Verhältnis zwischen der Ladungsmenge pro Flächeneinheit ρ_{A} für das Gleichstrom-Anodisieren und der Ladungsmenge pro Flächeneinheit ρ_{P} für das Wechselstrom-Pigmentieren ρ_{A}/ρ_{P} = 0,65 bis 0,8 beträgt.

Der besondere Vorteil des erfindungsgemäßen Verfahrens besteht darin, dass die selektiv absorbierenden Schichten mit hoher Genauigkeit und einem Höchstmaß an Reproduzierbarkeit an der metallischen Substratoberfläche erzeugt werden können. Durch die Bestimmung der für die Erzeugung der absorbierenden Beschichtung erforderlichen Ladungsmenge pro Flächeneinheit in Abhängigkeit von der zuvor bestimmten inneren Oberfläche der metallischen Substratoberfläche ist sichergestellt, dass sich nicht vollständig zu unterdrückende Schwankungen in den Umgebungsbedingungen, wie z.B. Lufttemperatur und -druck sowie die Temperatur des Elektrolyten bzw. die Ionenkonzentration darin, nicht nachteilig auf das Beschichtungsergebnis auswirken. So haben Untersuchungen der Anmelderin im Vorfeld der Erfindung gezeigt, dass bereits die Erzeugung der selektiv absorbierenden Schicht an vollständig identischen Substratoberflächen zu unterschiedlichen Tageszeiten, d.h. bei geringfügig abweichenden Temperaturen, zu sichtbaren Unterschieden in der Beschichtung und somit zu unterschiedlichen Schichtdicken und entsprechend zu einem nicht einheitlichen Absorptionsverhalten führen.

Durch Beachtung des Faraday-Gesetzes, wonach Ladungsmenge und elektrolytischer Stoffumsatz und somit Schichterzeugung streng zueinander proportional sind, wird ein gleichmäßiger und reproduzierbarer Schichtaufwuchs unabhängig von äußeren Umgebungsparametern sichergestellt. Dabei wird die erforderliche Ladungsmenge in Abhängigkeit von der inneren Oberfläche, die sich je nach mikroskopischer Beschaffenheit des Substrats von dessen makroskopisch bestimmbarer Oberfläche unterscheiden kann, bestimmt.

Erfindungsgemäß erfolgt die elektrolytische Erzeugung der absorbierenden Schicht in einem ersten Schritt durch Gleichstrom-Anodisieren der metallischen Oberfläche des Substrats unter Bildung einer porigen Oxidschicht. Derartige Anodisierverfahren ("Eloxieren") werden insbesondere bei Aluminiumoberflächen seit Jahren in industriellem Maßstab eingesetzt und eignen sich somit problemlos für die großtechnische Herstellung poriger Oxidationsschichten. Im Falle von Aluminiumoberflächen wird durch deren Anodisieren beispielsweise eine Al₂O₃-Schicht erzeugt. Im Falle von Kupfer ist dies eine Kupferoxidschicht. In einem zweiten Schritt erfolgt erfindungsgemäß ein Wechselstrom-Pigmentieren der Poren der Oxidschicht, wobei das Gleichstrom-Anodisieren und das Wechselstrom-Pigmentieren bis zum Erreichen der für den jeweiligen Schritt aus der inneren Oberfläche bestimmten Ladungsmenge pro Flächeneinheit erfolgt und danach abgebrochen wird. Durch diesen zweistufigen elektrolytischen Prozess wird eine qualitativ hochwertige, reproduzierbar erzeugbare Absorberschicht als sogenannte "Cermet"-Schicht (ceramic-metal) mit exzellenten Absorptionseigenschaften bei vergleichsweise geringem apparativem Aufwand auf der Substratoberfläche erzeugt. Die dem Wechselstrom zugrunde liegende Wechselspannung kann insbesondere sinusförmig, rechteckförmig oder auch unsymmetrisch über die Zeit verlaufen. Es ist ebenfalls möglich, dem Wechselstrom eine Gleichstrom-Komponente aufzulegen. Ebenso ist die Frequenz nicht festegelegt. Insbesondere kann die Wechselstrom-Pigmentierung somit auch mit der Netzfrequenz von 50 Hz durchgeführt werden. Schließlich entscheidet das Verhältnis aus Anodisier-Ladungsdichte und Pigmentier-Ladungsdichte über den solaren Absorptionskoeffizienten α. Wie die Erfinder überraschend herausgefunden haben, werden Absorptionskoeffizienten α > 90%, die eine optimale Gebrauchsfähigkeit der Solarabsorberbauteile und somit eine maximale Prozesseffizienz bei der Umsetzung von solarer Strahlungsenergie in Wärme, bei Verhältnissen von ρ_{A}/ρ_{P} = 0,65 bis 0,8 erhalten.

Gemäß einer ersten Ausgestaltung des erfindungsgemäßen Verfahrens kann das Substrat ein metallisches Bauteil, insbesondere ein plattenförmiges oder rohrförmiges Bauteil, sein. Ebenso kann das Substrat als im Roll-Bond-Verfahren hergestellter Aluminium-Kissenabsorber ausgebildet sein. Des Weiteren ist es möglich, Coilware im Rolle-zu-Rolle-Verfahren herzustellen. Im Übrigen können auch nicht metallische Substratmaterialien, beispielsweise Kunststoffe, verwendet werden, die eine metallische Oberfläche aufweisen. Gängige Verfahren sind z.B. galvanische Kunststoffbeschichtung oder die Plasmabeschichtung. Auch Glassubstrate können mit dem erfindungsgemäßen Verfahren hochselektiv beschichtet werden. In Untersuchungen der Anmelderin erwiesen sich mit einer transparenten leitfähigen Oxidschicht (TCO) beschichtete Glasoberflächen, hier insbesondere Indiumzinnoxid (ITO), Fluorzinnoxid (FTO), Aluminium Zink Oxid (AZO) und Antimonzinnoxid (ATO), als besonders geeignet.

Ferner kann das Substratmaterial auch folienartig, insbesondere als Aluminiumfolie, ausgebildet sein.

Um eine sichere Haftung der selektiv absorbierenden Beschichtung auf dem Substratuntergrund sicherzustellen, ist nach einer weiteren Ausgestaltung des erfindungsgemäßen Verfahrens vorgesehen, dass das Substrat mit einer Haftvermittlerschicht versehen wird. Je nach Beschaffenheit des Substratmaterials können unterschiedliche Haftvermittlerschichten aufgebracht werden. Bevorzugt wird eine Aluminium- oder Kupferschicht als Haftvermittlerschicht eingesetzt, da diese Elemente einen hohen Reflektionsgrad im Infrarotbereich und eine exzellente Wärmeleitfähigkeit aufweisen (Wärmeleitfähigkeit λ_{Cu} = 230-400 W/m*K; λ_{A1} = 230-400 W/m*K).

Handelt es sich bei dem Substratmaterial beispielsweise um ein zylindrisches Bauteil, insbesondere ein Stahlrohr, so kann die haftvermittelnde Schicht auch durch Überziehen eines Aluminiumrohrs auf das Stahlrohr aufgebracht werden. Hierzu wird ein dünnwandiges Aluminiumrohr verwendet, dessen Innendurchmesser geringfügig kleiner ist als der Außendurchmesser des Stahlrohrs. Im erwärmten Zustand kann es dann über das Stahlrohr gezogen werden und bildet nach dem Abkühlen mit diesem einen sehr festen Verbund. Anstelle eines Aluminiumrohres kann auch ein Kupferrohr zum Überziehen verwendet werden. Das Kupferrohr hat den Vorteil, dass im späteren Einsatz Temperaturen > 520°C im CSP-Receiver erzeugen werden können.

Es versteht sich, dass auch andere Verfahren, insbesondere Vakuumverfahren, zum Abscheiden einer Haftvermittlerschicht auf dem Substratmaterial eingesetzt werden können. Ebenso können auch Bauteile aus Aluminium- bzw. Kupfer-Vollmaterial eingesetzt werden.

Gemäß der Lehre der Erfindung wird die für die elektrolytische Erzeugung einer absorbierenden Schicht auf dem Solarabsorberbauteil die hierfür erforderliche Ladungsmenge in Abhängigkeit von der inneren Oberfläche des Substrats bestimmt. Die innere Oberfläche, d.h. die mikroskopische Oberfläche des Substrats, kann beispielsweise durch mechanische Abtastung im mikroskopischen Maßstab, bevorzugt durch Rasterkraftmikroskopie, bestimmt werden. Hierzu wird ein repräsentativer Oberflächenausschnitt von beispielsweise 10x10 µm² oder 50x50 µm² abgetastet. Erfindungsgemäß erfolgt die elektrolytische Erzeugung der absorbierenden Schicht in einem ersten Schritt durch Gleichstrom-Anodisieren der Substratoberfläche, wobei das Gleichstrom-Anodisieren bis zum Erreichen der aus der inneren Oberfläche bestimmten Ladungsmenge pro Flächeneinheit erfolgt und danach entsprechend abgebrochen wird. Die Flächenladungsdichte bei der Anodisierung ρ_{A} ist dabei direkt proportional zum thermischen Emissionsgrad ε. Empirisch hat die Anmelderin folgenden Zusammenhang gefunden: ε [%] = 5 * ρ_{A} [C/Cm²] + ε_{Substrat}[%], wobei ε für den Emissionsgrad der anodisierten Oberfläche und ε_{Substrat} für den Emissionsgrad des Substrats steht. Als Substratmaterialien kommen beispielsweise Aluminium oder Kupfer in Frage. Deren Emissionsgrad kann als Materialkonstante der Literatur entnommen werden (ε_{Aluminium} = 2,3% und ε_{Kupfer} = 2,9%).

In einem zweiten Schritt erfolgt erfindungsgemäß ein Wechselstrom-Pigmentieren der Poren der Oxidschicht, wobei das Gleichstrom-Anodisieren und das Wechselstrom-Pigmentieren bis zum Erreichen der für den jeweiligen Schritt aus der inneren Oberfläche bestimmten Ladungsmenge pro Flächeneinheit erfolgt und danach abgebrochen wird. Zur Pigmentierung der anodisierten Schicht können verschiedene Metalle eingesetzt werden. Bevorzugt wird die Wechselstrom-Pigmentierung mit einem Metall der Gruppe Ni, C, Al, Mg, Ca, Ti, V, Cr, Mn, Fe, Co, Cu, Zn, Ag und Sn durchgeführt.

Je nach Geometrie des zu beschichten Solarabsorberbauteils können unterschiedliche Strategien zur elektrolytischen Erzeugung der absorbierenden Schicht zum Einsatz kommen. Roll-Bond-Absorber mit einer nicht-planen Oberfläche (durch die aufgeblasenen Kanäle) können genauso wie Plattenware oder Folien beschichtet werden. Nach einer besonders vorteilhaften Ausgestaltung des Verfahrens ist das Solarabsorberbauteil zylindrisch ausgebildet, wobei die elektrolytische Erzeugung der absorbierenden Schicht mit stehend in einem mit einem Elektrolyten gefüllten Behälter positioniertem Solarabsorberbauteil erfolgt, wobei das zylindrische Solarabsorberbauteil koaxial zu einer umgebenden zylindrischen Gegenelektrode angeordnet wird.

Alternativ kann ein zylindrisch ausgebildetes Solarabsorberbauteil liegend in einem mit einem Elektrolyten gefüllten Behälter angeordnet werden, wobei das zylindrische Solarabsorberbauteil im Wesentlichen koaxial zu einer rinnenförmigen Gegenelektrode mit im Wesentlichen zylindrischer Innenfläche angeordnet wird. Dabei kann das zylindrische Solarabsorberbauteil hinsichtlich seines Umfangs vollständig oder teilweise in den Elektrolyten eingetaucht werden. Im Falle eines nur teilweisen Eintauchens in den Elektrolyten erfolgt die elektrolytische Erzeugung der absorbierenden Schicht somit nur auf dem in den Elektrolyten eingetauchten Umfangsabschnitt des zylindrischen Solarabsorberbauteils. Ist das zylindrische Solarabsorberbauteil als Receiver (bzw. als Absorberrohr in einem Receiverrohr) in einem Parabolrinnenkollektor vorgesehen, so versteht es sich, dass der beschichtete Umfangsabschnitt dem rinnenförmigen Spiegelsegmenten und der nicht beschichtete Abschnitt der Sonne zugewandt angeordnet wird.

Coilwaren insbesondere aus Aluminium oder Kupfer können mittels Rolle-zu-Rolle-Verfahren hochselektiv beschichtet werden. Dazu wird das Coilmaterial nach einer Ausgestaltung sukzessive durch vier Tauchbecken gezogen. Im ersten Becken wird das Material gereinigt, im zweiten wird mittels Gleichspannungsanodisierung eine porige Oxidschicht aufgebaut, im dritten Becken wird das Coilmaterial von Anodisierungseleletrolyten gesäubert und im letzten Becken erfolgt die Wechselstrom-Pigmentierung.

Dabei wird nach einer ersten Alternative das Coilmaterial mit dem Massenpotential verbunden, während die Gegenelektroden auf ein entsprechendes Potential (Gleichspannung für die Anodisierung, Wechselspannung für die Pigmentierung) gelegt wird. Nach einer zweiten Alternative wird die Anodisierungsgleichspannung an das Coilmaterial angelegt, während die Pigmentierung mit einem Summenpotential aus Pigmentierungs-Wechselspannung und Anodisierungsspannung erfolgt. Wie Untersuchungen der Anmelderin ergaben, erweist sich beides als problemlos machbar.

Nach einer weiteren Ausgestaltung der Erfindung kann auf die elektrolytisch erzeugte absorbierende Schicht schließlich eine transparente Anti-Reflexionsschicht aufgetragen werden. Diese kann beispielsweise aus einem Material der Gruppe Al₂O₃, SiO₂, SiO₂/SnO₂, TiO₂, 3-mercaptopropyltrimethoxysilane (MPTMS), Ceroxid, Natronwasserglas oder pyrolytisches SnO₂ oder F:SnO₂ (FTO bzw. Fluor-dotiertes Zinnoxid) gebildet werden. Diese Schicht dient als transparente, dünne Schicht dazu, Reflexionsverluste einzudämmen und zusätzlich einen Schutz gegen Luftfeuchtigkeit und Luftverschmutzung zu bilden. Dadurch wird auch die Degradation der Schicht verhindert, indem die eingebetteten Metallpartikel vor einer Oxidation bzw. "Hydroxidation" geschützt werden. Darüber hinaus wird die Oberflächenrauigkeit herabgesetzt, was die Reinigung der Oberflächen vereinfacht.

Ein weiterer Aspekt der vorliegenden Erfindung betrifft ein Solarabsorberbauteil, hergestellt nach einem Verfahren nach einem der Ansprüche 1-18.

Zu den Vorteilen dieses Solarabsorberbauteils wird auf das Vorstehende verwiesen.

Im Folgenden wird die Erfindung anhand einer ein Ausführungsbeispiel darstellenden Zeichnung näher erläutert.

Es zeigen:
- Fig. 1: ein mit einer selektiv absorbierenden Beschichtung versehenes Absorberrohr für einen Parabolrinnenkollektor im Querschnitt,
- Fig. 2: die hoch selektiv absorbierende Beschichtung des Absorberrohrs aus Fig. 1 in einer schematisierten Detailansicht,
- Fig. 3 a-c: eine Pore der selektiv absorbierenden Beschichtung im unpigmentierten, pigmentierten und überpigmerltierten Zustand,
- Fig. 4: die Reflektivität der selektiv absorbierenden Beschichtung in Prozent,
- Fig. 5: die Stromkennlinie der Gleichstrom-Anodisierung zur Erzeugung der selektiv absorbierenden Beschichtung unter Ladungskontrolle,
- Fig. 6: die Stromkennlinie der Wechselstrom-Pigmentierung der durch Anodisieren erzeugten Beschichtung unter Ladungskontrolle,
- Fig. 7: eine Vorrichtung zur elektrolytischen Beschichtung eines Absorberrohres in einer ersten Ausführung,
- Fig. 8: eine Vorrichtung zur elektrolytischen Beschichtung eines Absorberrohres in einer zweiten Ausführung,
- Fig. 9: eine Vorrichtung zur elektrolytischen Beschichtung eines Absorberrohres in einer dritten Ausführung und
- Fig. 10: eine Vorrichtung zur Applikation einer selektiv absorbierenden Beschichtung auf Coilware mittels eines Rolle-zu-Rolle-Verfahrens.

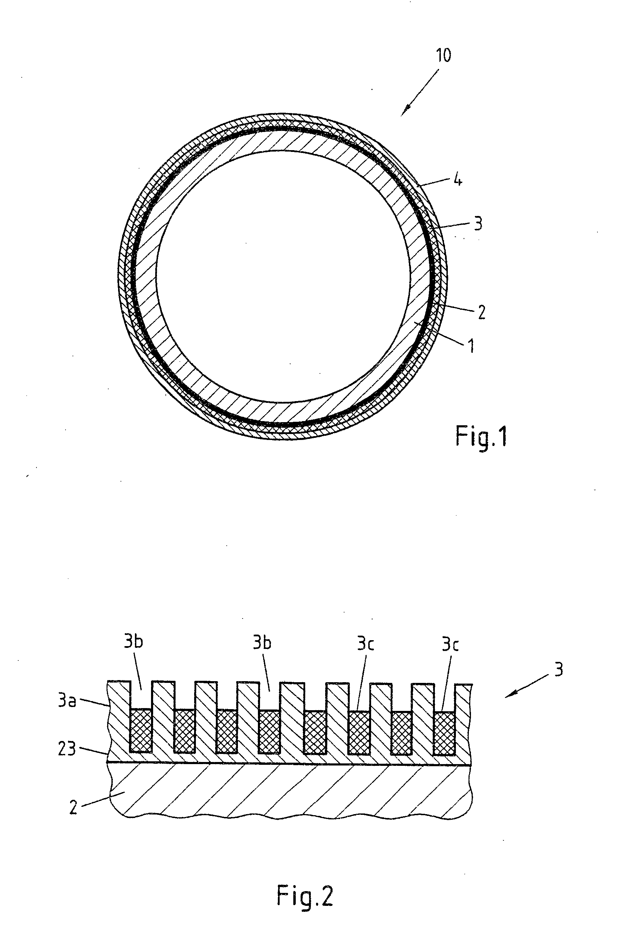

In Figur 1 ist ein mit einer selektiv absorbierenden Beschichtung versehenes Absorberrohr 10 für einen Parabolrinnenkollektor in einer Querschnittsansicht dargestellt. Hierbei ist die jeweilige Dicke der einzelnen Schichten relativ zur Dicke des Substratmaterials aus Gründen der Übersichtlichkeit nicht maßstäblich dargestellt.

Das Absorberrohr 10 der Fig. 1 umfasst ein Stahlrohr 1, welches auf seiner äußeren Oberfläche mit einer Haftvermittlerschicht 2 versehen ist. Hierbei handelt es sich bevorzugt um eine Aluminium- oder Kupferschicht, welche vorzugsweise elektrolytisch auf der Stahloberfläche abgeschieden ist. Da die Haftvermittlerschicht vollständig porenfrei zu sein hat, wird hierbei eine Mindestdicke der elektrolytisch abgeschiedenen Schicht von 8 - 10 µm bevorzugt.

Handelt es sich bei dem Stahlrohr 1 um ein Stahlrohr minderer Oberflächenqualität mit einer porigen Oberfläche, so ist es sinnvoll, durch elektrolytische Abscheidung einer lateralwachsenden Metallschicht (z.B. Nickel) zunächst die Poren an der Oberfläche elektrolytisch zu schließen und anschließend die Aluminium-Haftvermittlerschicht elektrolytisch abzuscheiden. Alternativ ist es möglich, ein dünnes Aluminiumrohr (z.B. AlMg3) oder ein Kupferrohr über das Stahlrohr zu ziehen. Hierzu wird das Aluminium- bzw. das Kupferrohr, dessen Innendurchmesser etwas kleiner ist als der Außendurchmesser des Stahlrohrs, erwärmt und über das Stahlrohr gezogen. Nach Erkalten bildet sich ein sehr fester Materialverbund.

Neben der elektrolytischen Abscheidung einer Haftvermittlerschicht ist es ebenfalls möglich, diese in einem Vakuumverfahren, beispielsweise PVD, aufzubringen. Hierbei ist ebenfalls darauf zu achten, dass die Haftvermittlerschicht absolut porenfrei ist.

Ferner versteht es sich, dass anstelle eines Stahlrohrs selbstverständlich auch Aluminium- bzw. Kupferrohre verwendet werden können. Kupferrohre haben den Vorteil, dass sich damit Oberflächentemperaturen > 520°C realisieren lassen.

Nicht dargestellt ist eine Ausführungsform eines Solarabsorberbauteils, bei dem das Substrat plattenförmig ist. Ebenso nicht dargestellt ist ein folienartiges Substrat insbesondere in Form einer Aluminium- oder Kupferfolie. Diese kann eine typische Dicke von 0,05 und 0,2 mm aufweisen. Wie Untersuchungen der Anmelderin ergeben haben, lassen sich mit dem erfindungsgemäßen Verfahren sogar haushaltsübliche Aluminiumfolien selektiv beschichten.

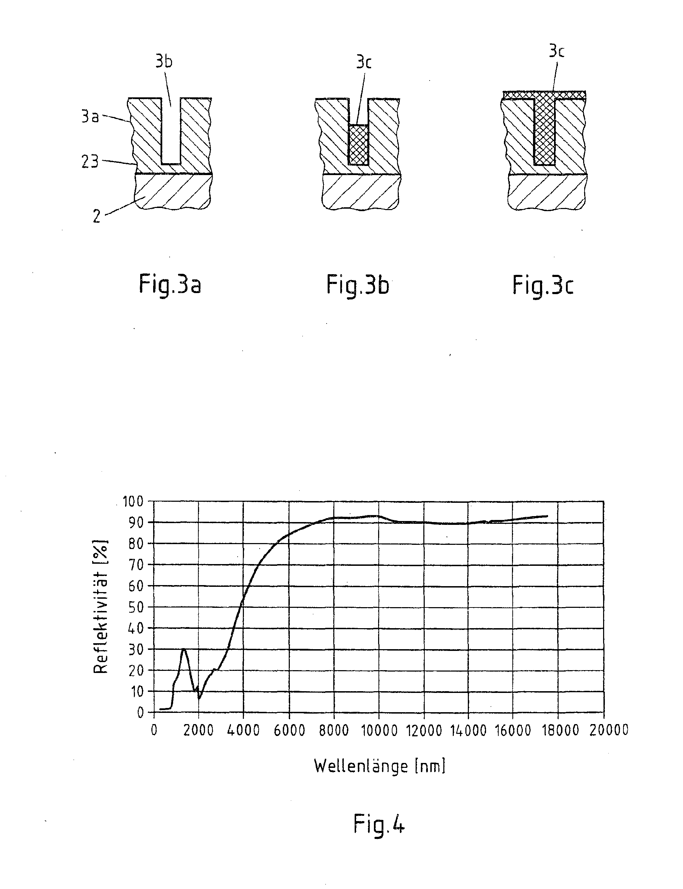

Auf der Haftvermittlerschicht 2 ist die selektiv absorbierende Beschichtung 3 aufgebracht. Aufgrund der Selektivität der Absorptionseigenschaften der vorliegenden Beschichtung 3 werden die Hauptanteile der Solarstrahlung im Wellenlängenbereich 0,3 - 2,5 µm stark absorbiert, während langwellige Anteile der Solarstrahlung reflektiert werden. Bei der selektiv absorbierenden Beschichtung 3 handelt es sich um eine pigmentierte anodisierte Schicht, die in einem zweistufigen Prozess auf der Haftvermittlerschicht 2 erzeugt wird. Der mikroskopische Aufbau der Schicht wird weiter unten im Zusammenhang mit den Figuren 2 und 3 erläutert.

Die äußerste Schicht des Schichtaufbaus des Absorberrohrs aus Fig. 1 wird durch eine Antireflexionsschicht 4 gebildet, welche als transparente, dünne Schicht Reflektionsverluste minimieren soll und gleichzeitig einen Schutz gegen Luftfeuchtigkeit und Luftverschmutzung bildet und die Degradation der hochselektiven Beschichtung verhindert. Als Materialien für die Antireflexionsschicht können Al₂O₃SiO₂/SnO₂, TiO₂, 3-mercaptopropyltrimethoxysilane (MPTMS), Ceroxid, Natronwasserglas oder pyrolytisches SnO₂ bzw. F:SnO₂ (FTO bzw. Fluor-dotiertes Zinnoxid) zum Einsatz kommen.

Besonders bevorzugt wird eine SiO₂-Schicht als Antireflexionsschicht eingesetzt, da der Brechungsindex von Quarzglas (n_{SiO2} ≈ 1, 55) besser an den Brechungsindex der das Absorberrohr im Einsatz umgebenden Luft (n_{Luft} ≈ 1) angepasst ist als dies beispielsweise bei Al₂O₃ (n_{Al2O3} ≈ 1,76) der Fall ist, so dass es im Falle einer SiO₂-Antireflexionsschicht zu vergleichsweise geringen Reflektionsverlusten kommt.

In Fig. 2 ist nun die anodisierte und pigmentierte selektiv absorbierende Beschichtung des Absorberrohrs der Fig. 1 ausschnittsweise in schematisierter Form dargestellt. Wiederum wird aus Gründen der Übersichtlichkeit auf eine maßstabsgerechte Darstellung verzichtet. Beim Gleichstrom-Anodisieren der darunter liegenden Aluminium-Haftvermittlerschicht 2 bildet sich zunächst eine dünne Al₂O₃-Barriereschicht 23, die als Antidiffusionsschicht zwischen der Haftvermittlerschicht 2 und der hoch selektiv absorbierenden Schicht 3 fungiert. Die Dicke der Barriereschicht 23 liegt hierbei bei ca. 25 nm. Bei fortgesetzter Gleichstrom-Anodisierung bildet sich oberhalb der Barriereschicht 23 eine porige Schicht 3a mit einer Dicke von ca. 300 - 500 nm. Der Durchmesser der Poren 3b kann im vorliegenden Ausführungsbeispiel mit 50 bis 80 nm angegeben werden. Diese Schichtstruktur kann unabhängig von variierenden Umgebungsbedingungen durch Konstanthaltung der Ladungsmenge bei der Gleichstrom-Arlodisierung präzise reproduziert werden.

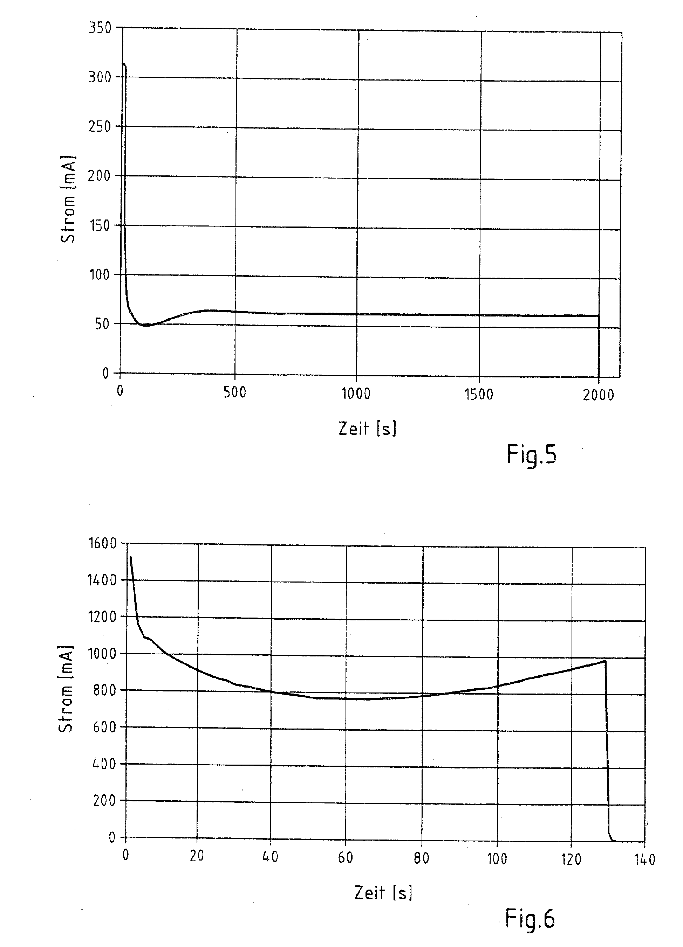

Nach Abbruch der Anodisierung nach Erreichen der vorbestimmten Ladungsmenge pro Flächeneinheit werden die Poren der Oxidschicht in einem Wechselstrom-Pigmentierungsschritt im Anschlusspigmentiert, wobei wiederum die in Abhängigkeit der inneren Oberfläche des Substrats bestimmte Ladungsmenge konstant gehalten wird. Zur Pigmentierung eignen sich die Metalle Ni, C, Al, Mg, Ca, Ti, V, Cr, Mn, Fe, Co, Cu, Zn, Ag und Sn. Wie im Zusammenhang mit Fig. 6 noch im Detail erläutert wird, kommt es dabei darauf an, die Poren 3b der porigen Oxidschicht 3a nicht in der Weise zu pigmentieren, dass das Metall-Pigment 3c aus den Poren 3b austritt und oberhalb der porigen Oxidschicht 3a einen geschlossenen Metallfilm im Monolagenbereich bildet.

In Fig. 4 ist die Reflektivität der selektiv absorbierenden Beschichtung gemäß Fig. 2 in Abhängigkeit von der Wellenlänge in Nanometern aufgetragen. Erkennbar sind insbesondere eine sehr geringe Reflektivität der Beschichtung von < 5% unterhalb einer Wellenlänge von ca. 800nm sowie eine Reflektivität im Bereich von konstant 90% ab einer Wellenlänge von 7.000 nm.

Im Folgenden wird der komplette Arbeitsgang der Herstellung einer selektiv absorbierenden Schicht auf einem Solarabsorberrohr anhand eines konkreten Ausführungsbeispiels beschrieben.

Zunächst erfolgt auf einem zylindrischen Stahlsubstrat das Aufbringen einer Aluminium-Haftvermittlerschicht. Nach einer Reinigung mit Isopropanol erfolgt ein Ätzen bzw. Beizen der Aluminium-Haftvermittlerschicht in Natronlauge oder herkömmlichen Aluminiumbeizen. Dadurch werden zum einen Oberflächenverunreinigungen entfernt und zum anderen werden das Barriereoxid und das natürliche Oxid auf der Aluminiumoberfläche entfernt. Wichtig ist, dass nach dem Beizen bzw. Ätzen nur noch Aluminium, Silizium oder Magnesium an der Oberfläche vorliegt, da ansonsten die Anodisierung und die Pigmentierung und somit die Beschichtungsergebnisse nicht perfekt sind.

Durch ein anschließendes chemisches oder elektrolytisches Glanzbad lässt sich die Emissivität des Al-Substrats noch weiter senken, was wiederum zu einer niedrigeren Gesamtemissivität (ε [%] = 5 * ρ_{A} [C/cm²] + ε_{A1} [%]) der fertigen Beschichtung führt.

Im folgenden Anodierungsvorgang kann an allen Stellen ein gleichdickes Oxid aufgebaut werden, in dessen Poren die Metallpartikel eingebaut werden können. Somit gewährleistet man eine hervorragende Beschichtungsqualität.

In einem Folgeschritt wird die innere Oberfläche mittels Rasterkraftmikroskopie (AFM) bestimmt. Die innere Oberfläche der Aluminium-Haftvermittlerschicht, z.B. beträgt bei einer mittleren Oberflächenrauheit von Rₐ = 56 nm typischerweise ca. 120 µm² bei einem 100 µm²-Messfeld. Mithilfe der empirisch gefunden Beziehung zwischen Flächenladungsdichte bei der Anodisierung ρ_{A} und dem thermischen Emissionsgrad ε (ρ_{A} [C/cm²] = (ε [%] - ε_{A1} [%])/5) wird hieraus die benötigte Ladungsmenge pro Flächeneinheit in C/cm² für die Gleichstrom-Anodisierung berechnet. Die Ladungsmenge fürs Pigmentieren ρ_{P} bestimmt sich aus ρ_{A}/ρ_{P} = 0,65 bis 0,8. Für die Anodisierung der Haftvermittlerschicht ergibt sich hierbei eine Ladungsmenge pro Flächeneinheit von beispielsweise 0,8 C/cm² für ε = 6,3 % und ε_{A1} = 2, 3 %.

Sodann erfolgt die Gleichstrom-Anodisierung der Aluminium-Haftvermittlerschicht. Diese wird in dem vorliegenden Ausführungsbeispiel bei einer Gleichspannung von 15 Volt in Phosphorsäure (H₃PO₄ - 9 Vol-%) durchgeführt, wobei auf der Aluminiumoberfläche eine Al₂O₃-Schicht erzeugt wird. Nach Erreichen der berechneten Ladungsmenge pro Flächeneinheit wird der Prozess gestoppt. Infolge der Ladungsmengenkontrolle können Schwankungen in der Temperatur des Elektrolyten und Schwankungen in der Elektrolyt-Konzentration, die zu erheblichen Schwankungen im Strom führen, ausgeglichen werden. Bei einem rein zeitabhängigen Schichtaufwuchs würden derartige Schwankungen zu nicht reproduzierbaren Beschichtungsergebnissen führen. Bei einer reinen Strom-Kontrolle würde bei Temperaturänderung die angelegte Spannung variiert, was wiederum zu einer unterschiedlichen Porenverteilung in der Oberfläche führen würde. Die Porengrößen und -abstande hängen entscheidend von der angelegten Anodisierspannung ab. Die im Zuge der Gleichstrom-Anodisierung erzeugte Al₂O₃-Schicht entspricht der in schematischer Form in Fig. 2 gezeigten. Die in Fig. 2 in seitlicher Schnittansicht dargestellten Poren 3b bilden in der Draufsicht hierbei ein hexagonales Gitter.

Die Dicke der sich im Zuge der Gleichstrom-Anodisierung bildenden Al₂O₃-Barriereschicht kann mit der Gleichung D = α * U bestimmt werden, wobei α = 1,2 bis 1,4 nm/V und U = 15 Volt die Gleichstrom-Anodisierungsspannung ist. Die Dicke der Barriereschicht beträgt demnach ca. 18 bis 21 Nanometern.

Der Abstand der Poren der selektiv absorbierenden Schicht kann mit D = β*U berechnet werden, wobei β = 2,5 nm/V und U = 15 Volt wiederum der Anodisierungsspannung entspricht. Der Abstand der Poren beträgt nach der vorstehenden Formel somit ca. 37,5 nm.

In Fig. 5 ist die Stromkennlinie für die Gleichstrom-Anodisierung der Aluminium-Haftvermittlerschicht dargestellt. Hierbei ist der Anodisierungsstrom gegen die Zeit aufgetragen. Wie in Fig. 5 erkennbar, fällt der Strom zunächst von einem Wert von ca. 315 mA auf einen Wert von ca. 50 mA exponentiell ab. In dieser Phase wird die Barriereschicht gebildet. Im Anschluss hieran steigt der Strom wieder langsam auf einen Wert von ca. 60 mA bis zu einer Behandlungsdauer von ca. 430 s an. In dieser Phase kommt es an den unregelmäßig dicken Oxidschichten zu Feldüberhöhungen an den Stellen mit dünnem Barriereoxid. Die Vertiefungen in der Barriereschicht entstehen und dienen als Keime zum Porenwachstum. In der dritten Phase, beginnend bei einer Behandlungsdauer von ca. 430 s bis zum Abbruch des Prozesses nach Erreichen der berechneten Ladungsmenge pro Flächeneinheit, kommt es bei dem vorstehend genannten Gleichspannungswert, der Elektrolytzusammensetzung und - konzentration zu einem stabilen Wachstum von Poren mit einem Durchmesser von ca. 50 bis 80 nm. Bei einer Behandlungsdauer von ca. 2000 s ist die berechnete Ladungsmenge pro Flächeneinheit erreicht, so dass die Anodisierung gestoppt wird, wie in Fig. 5 durch den schlagartigen Abfall des Anodisierungsstroms dargestellt.

Alternativ lässt sich die Al₂O₃- bzw. die Kupferoxid-Schicht auch in den aus der Eloxiertechnik bekannten Säuren (Chromsäure, Schwefelsäure) herstellen, wobei die Porengrößen und -verteilungen vom vorliegenden Ausführungsbeispiel abweichen.

Nach erfolgter Gleichstrom-Anodisierung der Aluminium-Haftvermittlerschicht erfolgt deren Pigmentierung in einem Wechselstrom-Pigmentierungsschritt. Diese wird bei dem vorliegenden Ausführungsbeispiel mit einer Nickel-Gegenelektrode und einer Pigmentierungslösung der folgenden Zusammensetzung durchgeführt:

| | |
|---|---|
| Nickelsulfathexahydrat | 30 g/l |
| Magnesiumsulfat | 20 g/l |
| Ammoniumsulfat | 20 g/l |
| Borsäure | 20 g/l. |

Es wurden mehrere Versuchsreihen mit Wechselspannungen von 5 bis 12 V, insbesondere 7,5 V durchgeführt, wobei die Wechselstromdichten zwischen 6,5 mA/cm² und 22,5 mA/cm² lagen. Die Wechselstrom-Pigmentierung wurde wiederum bis zum Erreichen der aus der inneren Oberfläche der Haftvermittlerschicht berechneten Ladungsmenge pro Flächeneinheit durchgeführt und danach automatisch beendet. Für das Verhältnis zwischen der Ladungsmenge pro Flächeneinheit ρ_{A} für das Gleichstrom-Anodisieren und der Ladungsmenge pro Flächeneinheit ρ_{P} für das Wechselstrom-Pigmentieren wird ein Wert ρ_{A}/ρ_{P} = 0,65 bis 0,8 gewählt.

In Fig. 6 ist die Stromkennlinie der Wechselstrom-Pigmentierung als Verlauf des Stroms über die Zeit aufgetragen. Wie in Fig. 6 erkennbar, sinkt der Strom mit fortschreitender Behandlungsdauer ab und durchschreitet bei ca. 60 s ein lokales Minimum ("Delta-Peak") . Anschließend steigt der Strom wieder an. Wie Untersuchungen der Anmelderin ergeben haben, erfolgt in der Phase des mit der zeit abklingenden Stromflusses eine reguläre Auffüllung der Poren der anodisierten Schicht mit dem Pigment. Eine regulär gefüllte Pore ist in Fig. 3b dargestellt. Sobald der Delta-Peak durchschritten ist, erfolgt eine Überpigmentierung der Poren in der Weise, dass das Pigment aus der vollständig gefüllten Pore austritt und beginnt, einen geschlossenen Metallfilm im Monolagenbereich oberhalb der porigen anodisierten Schicht zu bilden. Dies ist in Fig. 3c schematisch dargestellt. Um eine Überpigmentierung, die mit einem Absinken der Absorption im optischen Spektralbereich einhergehen würde, zu vermeiden, wird die Wechselstrom-Pigmentierung somit stets im monoton fallenden Bereich der Stromkennlinie gemäß Fig. 6 betrieben. Dementsprechend erfolgt der Abbruch der Pigmentierung bei Erreichen der berechneten Ladungsmenge pro Flächeneinheit vor Erreichen des Delta-Peaks.

Wie die Untersuchungen der Anmelderin insgesamt zeigen, sind vergleichsweise geringe Stromdichten im Bereich 4 - 6 mA/cm² sowohl für die Gleichstrom-Anodisierung als auch für die Wechselstrom-Pigmentierung ausreichend. Hieraus ergeben sich Flächenladungsdichten von weniger als 1,2 C/cm² bei der Anodisierung und 0,8-0,95 C/cm² bei der Pigmentierung.

Nach erfolgter Pigmentierung der anodisierten Beschichtung erfolgt noch der Auftrag einer Antireflexionsschicht, der auch eine Schutzfunktion gegen äußere Einflüsse zukommt. Bevorzugt wird eine SiO₂-Schicht mittels Dip-Coating aufgetragen. Der Schichtauftrag der Antireflexionsschicht durch Dip-Coating auf der selektiv absorbierenden Beschichtung des Absorberrohrs wird bei dem vorliegenden Ausführungsbeispiel in einer Tetraethylorthosilikat-Lösung (TEOS) mit einer Konzentration von 105 g/l (Lösungsmittel Isopropylalkohol) bei einer Dip-Geschwindigkeit von ca. 0,5 mm/s durchgeführt. Anschließend erfolgt ein Tempern der Beschichtung bei 300-320°C.

Soll die Antireflexionsschicht durch eine Al₂O₃-, eine TiO₂-, eine 3-mercaptopropyltrimethoxysilane- (MPTMS), eine Ceroxid-, eine Natronwasserglas- oder eine SiO₂/SnO₂-Schicht gebildet werden, so kann auch hier der Auftrag mittels Dip-Coating erfolgen.

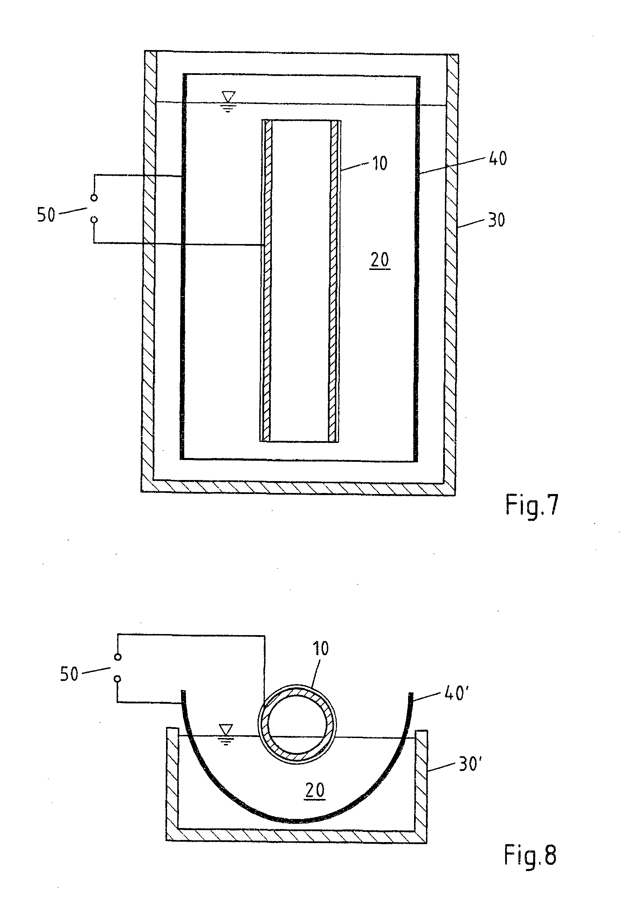

In den Fig. 7 und 8 sind zwei verschiedene Ausführungsformen einer Vorrichtung zur Erzeugung einer selektiv absorbierenden Beschichtung auf der Oberfläche eines Absorberrohrs 10 dargestellt. In der Vorrichtung gemäß Fig. 7 ist das zylindrische Absorberrohr 10 stehend in einem mit einem Elektrolyten 20 gefüllten Tauchbecken 30 und koaxial zu einer umgebenden Gegenelektrode 40 positioniert, so dass das sich zwischen dem Absorberrohr 10 und der Gegenelektrode bei Aktivierung der Spannungsquelle 50 - dies kann je nach jeweils durchgeführtem Verfahrensschritt eine Gleichspannungsquelle oder eine Wechselspannungsquelle sein - ein über den gesamten Umfang des Absorberrohrs 10 konstantes E-Feld ausbildet. Der Vorteil dieser Beschichtungsvorrichtung liegt in einer sehr gleichmäßigen Beschichtung des Absorberrohrs 10 über dessen gesamten Umfang. Allerdings erfordert der Betrieb dieser Vorrichtung entsprechende Hebezeuge für das Handling der oft mehrere Meter langen Absorberrohre.

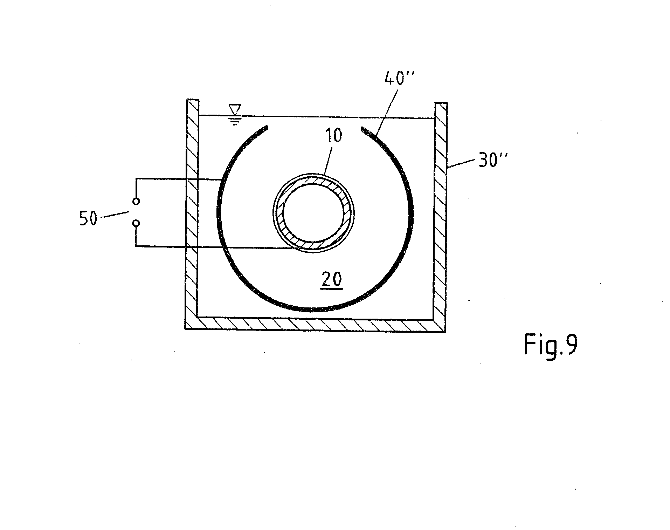

In den Fig. 8 und 9 sind zwei zu Fig. 7 alternative Ausgestaltungen einer Beschichtungsvorrichtung dargestellt. In der Beschichtungsvorrichtung gemäß Fig. 8 erfolgt die Beschichtung der Oberfläche des Absorberrohrs 10 in liegender Position in einem langgestreckten, vergleichsweise flachen Becken 30'. Das Absorberrohr ist hierbei von einer rinnenförmigen Gegenelektrode 40' mit im Wesentlichen zylindrischer Innenfläche umgeben. Wie dargestellt, ist das Absorberrohr 10 nur teilweise in den Elektrolyten 20 eingetaucht, so dass eine Beschichtung mit der selektiv absorbierenden Schicht umfangsmäßig nur auf einem Teil der Oberfläche des Absorberrohrs 10 erfolgt. Durch die Wahl der Eintauchtiefe kann der beschichtete Umfangsabschnitt entsprechend eingestellt werden. Es versteht sich, dass der beschichtete Umfangsabschnitt im späteren Einsatz des Absorberrohrs 10 in einem Parabolrinnenkollektor den Spiegelsegmenten zugewandt werden muss, während der nicht oder nur ungleichmäßig beschichtete Umfangsabschnitt der Sonne zuzuwenden ist. Der Vorteil dieser Vorrichtung liegt in der besonders einfachen zuführung und Herausnahme der Absorberrohre in das bzw. aus dem Becken 30'.

Bei der Beschichtungsvorrichtung der Fig. 9 erfolgt die Beschichtung der Oberfläche des Absorberrohrs 10 in liegender Position wiederum in einem langgestreckten, flachen Becken 30''. Das Absorberrohr ist hierbei im Unterschied zu der Vorrichtung der Fig. 8 von einer zylindrischen, oberseitig längs geöffneten Gegenelektrode 40" umgeben. Ferner ist das Absorberrohr 10 im Unterschied zu der Vorrichtung der Fig. 8 vollständig in den Elektrolyten 20 eingetaucht. Entsprechend erfolgt hier, wie bei der Vorrichtung der Fig. 7 eine vollflächige Beschichtung mit der selektiv absorbierenden Schicht.

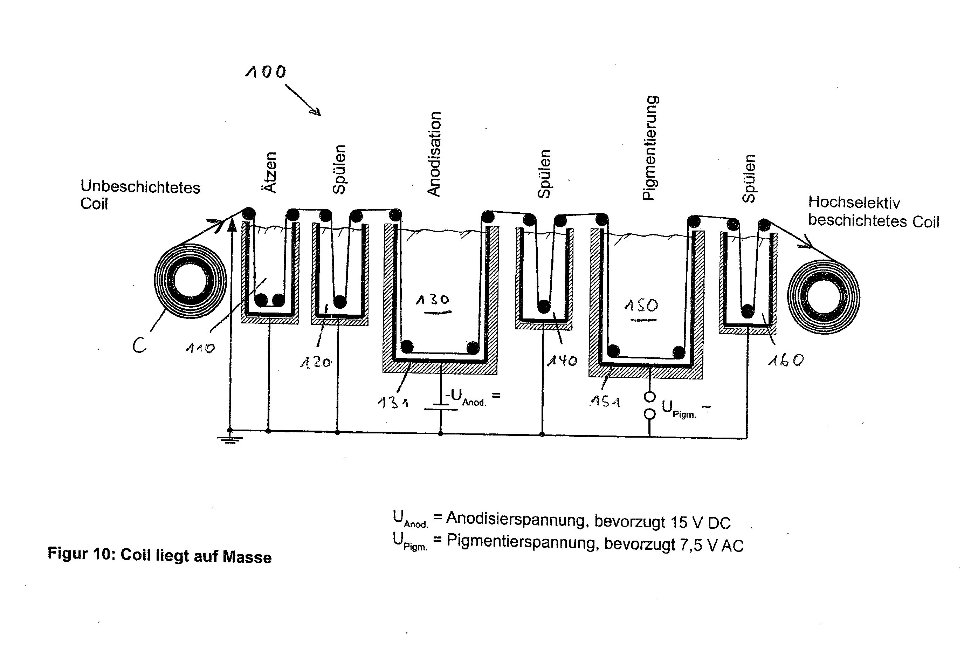

In Fig. 10 ist die Beschichtung einer Aluminium- oder Kupferoberfläche von Coilware mittels Rolle-zu-Rolle-Verfahren auf einer entsprechenden Bandbeschichtungsanlage 100 dargestellt. Dazu wird das zu einem Coil gewickelte Aluminium- oder Kupferband C - es können auch Stahlbänder mit einer entsprechenden Oberflächenbeschichtung zum Einsatz kommen - sukzessive durch sechs Tauchbecken 110-160 gezogen. Im ersten Becken 110 wird das Bandmaterial C geätzt und im folgenden Spülbecken 120 anschließend gespült, im dritten Tauchbecken 130 wird mittels Gleichspannungsanodisierung, mit bevorzugt U_{Anod.} = ca. 15 V_{DC} eine porige Oxidschicht auf der Bandoberfläche aufgebaut und im darauffolgenden Spülbecken 140 von dem Anodisierungselektrolyten gesäubert. Im fünften Becken 150 erfolgt sodann die Wechselstrom-Pigmentierung mit bevorzugt U_{Pigm.} = ca. 7,5 V_{AC} und im dahinter angeordneten Spülbecken 160 die Reinigung von dem Pigmentierelektrolyten. Bei dem mit der Vorrichtung der Fig. 10 durchgeführten Beschichtungsverfahren wird das Aluminium- oder Kupferband C, d.h. die Coilware, wie dargestellt mit dem Massepotential verbunden, während die Gegenelektroden 131, 151 auf ein entsprechend entgegen gerichtetes Potential gelegt werden.

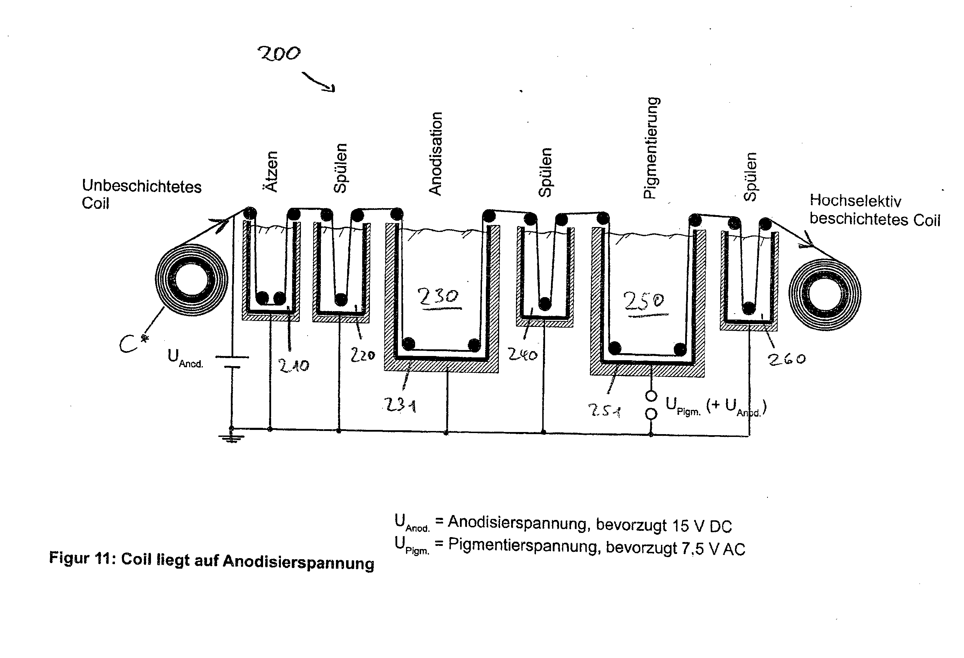

Bei der Beschichtungsvorrichtung der Fig. 11 erfolgt die Beschichtung der Aluminium- oder Kupferoberfläche des Bandmaterials C* ebenfalls mittels eines Rolle-zu-Rolle-Verfahrens. Dazu wird das Coilmaterial C* sukzessive durch sechs Tauchbecken 210-260 gezogen. Im ersten Becken 210 wird das Material geätzt und im Spülbecken 220 anschließend gespült. Im dritten Tauchbecken 230 wird mittels Gleichspannungsanodisierung eine porige Oxidschicht auf der Bandoberfläche aufgebaut, die daraufhin im darauffolgenden vierten Becken 240 von dem Anodisierungselektrolyten gesäubert wird. Im fünften Becken 250 erfolgt die Wechselstrompigmentierung. Im wiederum darauffolgenden sechsten Becken 260 erfolgt die Reinigung von dem Pigmentierelektrolyten. Dabei wird, wie in Fig. 11 dargestellt, die Anodisiergleichspannung von bevorzugt U_{Anod}. = ca. 15 V_{DC} auf das Coilmaterial C* gelegt, wobei die Pigmentierung bei einer Überlagerung der Anodisierungsgleichspannung mit der Wechselspannung von bevorzugt U_{Pigm}. = ca. 7, 5 V_{AC} für die Pigmentierung erfolgt.

## Patentansprüche

1. Verfahren zur Herstellung einer selektiv absorbierenden Beschichtung auf einem Solarabsorberbauteil (10) umfassend die folgenden Verfahrensschritte:
- Bereitstellen eines Substrats (1) mit metallischer Oberfläche,
- Bestimmung der inneren Oberfläche der metallischen Oberfläche,
- Bestimmung der für die Erzeugung der absorbierenden Beschichtung erforderlichen Ladungsmenge pro Flächeneinheit in Abhängigkeit der inneren Oberfläche,
- Elektrolytische Erzeugung der absorbierenden Schicht (3) in einem ersten Schritt durch Gleichstrom-Anodisieren der metallischen Oberfläche des Substrats (1) unter Bildung einer porigen Oxidschicht und in einem zweiten Schritt durch Wechselstrom-Pigmentieren der Poren der Oxidschicht, wobei das Gleichstrom-Anodisieren und das Wechselstrom-Pigmentieren bis zum Erreichen der für den jeweiligen Schritt aus der inneren Oberfläche bestimmten Ladungsmenge pro Flächeneinheit erfolgt,
wobei das Verhältnis zwischen der Ladungsmenge pro Flächeneinheit ρ_{A} für das Gleichstrom-Anodisieren und der Ladungsmenge pro Flächeneinheit ρ_{P} für das Wechselstrom-Pigmentieren ρ_{A}/ρ_{P} = 0,65 bis 0,8 beträgt.

2. Verfahren nach Anspruch 1,
**dadurch gekennzeichnet, dass**
das Substrat (1) ein metallisches Bauteil, insbesondere ein plattenförmiges oder rohrförmiges Bauteil, ist.

3. Verfahren nach Anspruch 2,
**dadurch gekennzeichnet, dass**
- das Substrat (1) ein metallisches Bauteil, insbesondere ein Stahl- oder Edelstahlbauteil, mit einer haftvermittelnden metallischen Oberflächenbeschichtung (2), insbesondere mit einer Oberflächenbeschichtung (2) aus Aluminium oder Kupfer, ist,
oder
- das Substrat ein aufgeblasener Kissenabsorber ist, der im Roll-Bond-Verfahren aus zwei metallischen Blechen hergestellt ist.

4. Verfahren nach einem der Ansprüche 2 oder 3,
**dadurch gekennzeichnet, dass**
das Substrat (1) zylindrisch ausgebildet ist und die haftvermittelnde Schicht durch Überziehen eines Aluminium-oder Kupferrohrs aufgebracht wird.

5. Verfahren nach Anspruch 1,
**dadurch gekennzeichnet, dass**
das Substrat folienartig, insbesondere als Aluminium- oder Kupferfolie, ausgebildet ist.

6. Verfahren nach Anspruch 1,
**dadurch gekennzeichnet, dass**
das Substrat ein Glassubstrat, insbesondere ein TCO-beschichtetes Glassubstrat, ist.

7. Verfahren nach einem der Ansprüche 1 bis 6,
**dadurch gekennzeichnet, dass**
die innere Oberfläche der metallischen Oberfläche des Substratmaterials mittels Rasterkraftmikroskopie bestimmt wird.

8. Verfahren nach einem der Ansprüche 1 bis 7,
**dadurch gekennzeichnet, dass**
die auf die Substratoberfläche durch Gleichstrom-Anodisieren aufgebrachte absorbierende Schicht eine Al₂O₃-oder Kupferoxid-Schicht ist.

9. Verfahren nach einem der Ansprüche 1 bis 8,
**dadurch gekennzeichnet, dass**
die Wechselstrom-Pigmentierung mit einem Metall der Gruppe Ni, C, A1, Mg, Ca, Ti, V, Cr, Mn, Fe, Co, Cu, Zn, Ag und Sn durchgeführt wird.

10. Verfahren nach einem der Ansprüche 1 bis 9,
**dadurch gekennzeichnet, dass**
das Solarabsorberbauteil (10) zylindrisch ausgebildet ist, wobei die elektrolytische Erzeugung der absorbierenden Schicht (3) mit stehend in einem mit einem Elektrolyten (20) gefüllten Behälter (30) positioniertem Solarabsorberbauteil (10) erfolgt, wobei das zylindrische Solarabsorberbauteil (10) koaxial zu einer umgebenden zylindrischen Gegenelektrode (40) angeordnet wird.

11. Verfahren nach einem der Ansprüche 1 bis 10,
**dadurch gekennzeichnet, dass**
das Solarabsorberbauteil (10) zylindrisch ausgebildet ist, wobei die elektrolytische Erzeugung der absorbierenden Schicht (3) bei liegend in einem mit einem Elektrolyten (20) gefüllten Behälter (30', 30") positionierten Solarabsorberbauteil (10) erfolgt, wobei das zylindrische Solarabsorberbauteil (10) im Wesentlichen koaxial zu einer rinnenförmigen Gegenelektrode (40', 40") mit im Wesentlichen zylindrischer Innenfläche angeordnet wird, wobei
das zylindrische Solarabsorberbauteil (10) hinsichtlich seines Umfangs insbesondere nur teilweise in den Elektrolyten (20) eingetaucht wird..

12. Verfahren nach einem der Ansprüche 1 bis 11,
**dadurch gekennzeichnet, dass**
auf die elektrolytisch erzeugte absorbierende Schicht (3) eine transparente Anti-Reflexionsschicht (4) aufgetragen wird.

13. Verfahren nach Anspruch 12,
**dadurch gekennzeichnet, dass**
die Anti-Reflexions-/Schutzschicht (4) aus einem Material der Gruppe Al₂O₃, TiO₂, 3-mercaptopropyltrimethoxysilane (MPTMS), Ceroxid, Natronwasserglas, SiO₂, SiO₂/SnO₂ oder pyrolytisches SnO₂ oder F:SnO₂ (FTO bzw. Fluor-dotiertes Zinnoxid) gebildet wird.

14. Verfahren nach Anspruch 1,
**dadurch gekennzeichnet, dass**
das Substrat ein Aluminium- oder Kupferband (C, C*) oder ein mit einer Aluminium- oder Kupferbeschichtung beschichtetes Stahlband ist, welches im Rolle-zu-Rolle-Verfahren beschichtet wird.

## Claims

1. Method for producing a selectively absorbing coating on a solar absorber element (10) comprising the following steps:
- providing a substrate (1) having a metallic surface;
- determining the inner surface of the metallic surface;
- determining the charge quantity per unit area required for producing the absorbing coating as a function of the inner surface;
- electrolytically producing the absorbing layer (3) in a first step by direct-current anodising the metallic surface of the substrate (1) under formation of a porous oxide layer, and in a second step by alternating-current pigmenting the pores of the oxide layer, wherein the direct-current anodising and the alternating-current pigmenting are carried out until the charge quantity per unit area determined for the respective step from the inner surface is reached,
wherein the ratio between the charge quantity per unit area ρ_{A} for the direct-current anodising and the charge quantity per unit area ρ_{P} for the alternating-current pigmenting is ρA/ρ_{P} = 0.65 to 0.8.

2. Method according to claim 1, **characterised in that** the substrate (1) is a metallic component, in particular a plate-like or tubular component.

3. Method according to claim 2, **characterised in that**
- the substrate (1) is a metallic component, in particular a steel or stainless steel component, having an adhesion-promoting metallic surface coating (2), in particular having a surface coating in aluminium or copper,
or
- the substrate is an inflated cushion absorber which is produced from two metallic sheets in a roll-bond process.

4. Method according to one of claims 2 or 3, **characterised in that** the substrate (1) is cylindrically formed and the adhesion-promoting layer is applied by pulling over an aluminium or copper tube.

5. Method according to claim 1, **characterised in that** the substrate is foil-like, in particular is formed as an aluminium or copper foil.

6. Method according to claim 1, **characterised in that** the substrate is a glass substrate, in particular a TCO-coated glass substrate.

7. Method according to one of claims 1 to 6, **characterised in that** the inner surface of the metallic surface of the substrate is determined by means of atomic force microscopy.

8. Method according to one of claims 1 to 7, **characterised in that** the absorbing layer deposited onto the substrate surface by direct-current anodising is an Al₂O₃ or copper oxide layer.

9. Method according to one of claims 1 to 8, **characterised in that** the alternating-current pigmenting is carried out using a metal from the group of Ni, C, Al, Mg, Ca, Ti, V, Cr, Mn, Fe, Co, Cu, Zn, Ag and Sn.

10. Method according to one of claims 1 to 9, **characterised in that** the solar absorber element (10) is cylindrical, wherein electrolytical production of the absorbing layer (3) ensues with the solar absorber element (10) positioned standing in a container (30) filled with an electrolyte (20), the cylindrical solar absorber element (10) being arranged coaxially to a surrounding cylindrical counter electrode (40).

11. Method according to one of claims 1 to 10, **characterised in that** the solar absorber element (10) is cylindrically formed, wherein the absorbing layer (3) is electrolytically produced with the solar absorber element (10) positioned lying in a container (30', 30") filled with an electrolyte (20), wherein the cylindrical solar absorber element (10) is arranged essentially coaxially to a gutter-shaped counter electrode (40', 40") with an essentially cylindrical inner surface,
wherein
the cylindrical solar absorber element (10) with respect to its circumference, in particular, is only partly immersed in the electrolyte (20).

12. Method according to one of claims 1 to 11, **characterised in that** a transparent anti-reflection layer (4) is applied onto the electrolytically produced absorbing layer (3).

13. Method according to claim 12, **characterised in that** the anti-reflection layer (4) is formed from a material from the group of Al₂O₃, TiO₂, 3-mercaptopropyltrimethoxysilane (MPTMS), cerium oxide, sodium silicate, SiO₂, SiO₂/SnO₂ or pyrolytic SnO₂ or F:SnO₂ (FTO or fluorine-doped tin oxide, respectively).

14. Method according to claim 1, **characterised in that** the substrate is an aluminium or copper strip (C, C*) or a steel strip coated with an aluminium or copper coating which is coated in a roll-to-roll process.

## Revendications

1. Procédé pour la réalisation d'un revêtement (3) sélectivement absorbant sur un élément d'absorbeur solaire (10) comprenant les étapes de procédé suivantes:
- mise à disposition d'un substrat (1) avec une surface métallique,
- détermination de la surface interne de la surface métallique,
- détermination de la quantité de charge par unité de surface nécessaire pour la génération du revêtement absorbant en fonction de la surface interne,
- génération électrolytique de la couche absorbante (3) dans une première étape par anodisation par courant continu de la surface métallique du substrat (1) sous formation d'une couche d'oxyde poreuse et, dans une deuxième étape, par pigmentation par courant alternatif des pores de la couche d'oxyde, où l'anodisation par courant continu et la pigmentation par courant alternatif ont lieu jusqu'à atteindre la quantité de charge par unité de surface déterminée pour l'étape respective à partir de la surface interne,
où le rapport entre la quantité de charge par unité de surface ρ_{A} pour l'anodisation par courant continu et la quantité de charge par unité de surface ρ_{P} pour la pigmentation par courant alternatif est de ρ_{A}/ρ_{P} = 0,65 à 0,8.

2. Procédé selon la revendication 1, **caractérisé en ce que** le substrat (1) est un élément métallique, en particulier un élément en forme de tube ou en forme de plaque.

3. Procédé selon la revendication 2, **caractérisé en ce que**
- le substrat (1) est un élément métallique, en particulier un élément en acier ou en acier inoxydable, avec un revêtement de surface (2) métallique promoteur d'adhérence, en particulier avec un revêtement de surface (2) en aluminium ou en cuivre,
ou
- le substrat est un absorbeur coussin gonflé qui est produit à partir de deux tôles métalliques en un procédé de type roll-bond.

4. Procédé selon une des revendications 2 ou 3, **caractérisé en ce que** le substrat (1) est formé de sorte à être cylindrique et la couche promotrice d'adhérence est appliquée par enrobage d'un tube en cuivre ou en aluminium.

5. Procédé selon la revendication 1, **caractérisé en ce que** le substrat (1) est formé de sorte à être une feuille, en particulier en tant que feuille en cuivre ou en aluminium.

6. Procédé selon la revendication 1, **caractérisé en ce que** le substrat (1) est un substrat en verre, en particulier un substrat en verre à revêtement TCO.

7. Procédé selon une des revendications de 1 à 6, **caractérisé en ce que** la surface interne de la surface métallique du matériel de substrat est déterminée à l'aide de la microscopie à force atomique.

8. Procédé selon une des revendications de 1 à 7, **caractérisé en ce que** la couche absorbante appliquée par anodisation par courant continu sur la surface de substrat est une couche Al₂O₃ ou une couche en oxyde de cuivre.

9. Procédé selon une des revendications de 1 à 8, **caractérisé en ce que** la pigmentation par courant alternatif est effectuée avec un métal appartenant au groupe Ni, C, Al, Mg, Ca, Ti, V, Cr, Mn, Fe, Co, Cu, Zn, Ag et Sn.

10. Procédé selon une des revendications de 1 à 9, **caractérisé en ce que** l'élément d'absorbeur solaire (10) est cylindrique, où la génération électrolytique de la couche absorbante (3) a lieu avec l'élément d'absorbeur solaire (10) positionné debout dans un conteneur (30) rempli avec un électrolyte (20), l'élément d'absorbeur solaire (10) cylindrique étant agencé de manière coaxiale par rapport à une contre-électrode (40) cylindrique entourante.

11. Procédé selon une des revendications de 1 à 10, **caractérisé en ce que** l'élément d'absorbeur solaire (10) est cylindrique, où la génération électrolytique de la couche absorbante (3) a lieu avec l'élément d'absorbeur solaire (10) positionné de manière couchée dans un conteneur (30', 30") rempli avec un électrolyte (20), l'élément d'absorbeur solaire (10) cylindrique étant agencé essentiellement de manière coaxiale par rapport à une contre-électrode (40', 40") en forme de rigole avec une surface interne essentiellement cylindrique,
où
l'élément d'absorbeur solaire (10) cylindrique, en ce qui concerne sa périphérie, est trempé, en particulier, uniquement partiellement dans l'électrolyte (20).

12. Procédé selon une des revendications de 1 à 11, **caractérisé en ce qu'**une couche anti-réfléchissante (4) transparente est appliquée sur la couche absorbante (3) générée par électrolyse.

13. Procédé selon la revendication 12, **caractérisé en ce que** la couche de protection anti-réfléchissante (4) est formée à partir d'un matériel appartenant au groupe Al₂O₃, TiO₂, 3-mercaptopropyltriméthoxysilane (MPTMS), ceroxyde, verre soluble sodique, SiO₂, SiO₂/SnO₂ ou SnO₂ pyrolytique ou F:SnO₂ (FTO ou respectivement un oxyde d'étain dopé au fluor).

14. Procédé selon la revendication 1, **caractérisé en ce que** le substrat est une bande en cuivre ou en aluminium (C, C*) ou une bande en acier recouverte d'un revêtement en cuivre ou en aluminium, laquelle est revêtue par un processus rouleau à rouleau.
